# EUROPÄISCHE PATENTSCHRIFT

(11) **EP 0 539 769 B1**
(45) Veröffentlichungstag und Bekanntmachung des Hinweises auf die Patenterteilung: **20.12.1995**
(21) Anmeldenummer: 92117095.7
(22) Anmeldetag: 07.10.1992
(51) Int. Cl.: B65G 15/62

(54) **Abdichteinrichtung für ein laufendes Band**
Sealing device for a moving conveyor belt
Dispositif d'étanchéité pour un convoyeur à bande en marche

(30) Priorität: 29.10.1991 DE 4135613
(43) Veröffentlichungstag der Anmeldung: 05.05.1993
(73) Patentinhaber: Santrade Ltd., CH-6002 Luzern (CH)
(72) Erfinder: Mönch, Walter, W-7000 Stuttgart 31 (DE)
(74) Vertreter: Wilhelm & Dauster Patentanwälte European Patent Attorneys

(56) Entgegenhaltungen:
- US-A- 3 387 464

## Beschreibung

Die Erfindung betrifft eine Abdichteinrichtung für ein laufendes Band, das mindestens auf einer Seite, insbesondere auf seiner Unterseite, von einem flüssigen oder kondensierenden dampfförmigen Medium beaufschlagt ist, um einen Wärmetransport zu oder von Gütern zu bewirken, die auf der anderen Bandseite liegen, bestehend aus im Bereich der Seitenkanten des Bandes am Band anliegenden Dichtleisten (siehe US-A-3387464).

Abdichteinrichtungen dieser Art sind auch bei Bandkühlern bekannt, wie sie von der Sandvik Process Systems, D 7012 Fellbach, vertrieben werden. Bei diesen Bauarten sind im Seitenbereich der Unterseite eines Stahlbandes hochkant stehende Dichtleisten vorgesehen, die mit ihrer schmalen oberen Stirnseite am Band anliegen. Sie sollen verhindern, daß das aus Sprühdüsen gegen die Bandunterseite gesprühte Kühlwasser seitlich über die Unterseite des Bandes hinausgeschleudert wird. Dabei ist es auch bekannt, diesen Dichtleisten noch bürstenartige Abdichtelemente zuzuordnen, die auf der Außenseite der Dichtleisten liegen und verhindern sollen, daß das an der Unterseite des Bandes anhaftendes Wasser bis zu den Seitenkanten des Bandes und von dort unter Umständen noch auf die Bandoberseite gelangt. Bekannt ist es schließlich auch, das Band selbst im Bereich seiner Außenkanten und im Bereich außerhalb dieser Dichtleisten mit nach unten abragenden mitlaufenden elastischen Wülsten zu versehen, die als Abtropfkanten für anhaftendes Wasser dienen. Der Herstellungs- und Montageaufwand für solche Dichtungsarten ist verhältnismäßig groß.

Der Erfindung liegt die Aufgabe zugrunde, eine Abdichteinrichtung der eingangs genannten Art so auszubilden, daß auf die Anordnung mehrerer verschiedener Abdicht- oder Abtropfelemente verzichtet werden kann.

Zur Lösung dieser Aufgabe wird bei einer Abdichteinrichtung der eingangs genannten Art vorgesehen,daß die Dichtleisten an ihrer am Band anliegenden Seite mit Nuten versehen sind, die in der Bandlaufrichtung vom Bereich der Bandaußenkanten aus schräg nach innen verlaufen. Durch diese Ausgestaltung wird Flüssigkeit, die möglicherweise am Band anhaftet, durch die Relativbewegung zwischen der Bandunterseite und den schrägen Nuten zur Bandmitte, d.h. in den Bereich zurückgeführt, in dem die Sprühdüsen und die Auffangeinrichtung für das Kühlmedium angeordnet sind. Zusätzliche Dichtmaßnahmen werden überflüssig.

Nach den Unteransprüchen, in denen vorteilhafte Weiterbildungen der Erfindung gekennzeichnet sind, können die Nuten parallel zueinander und in kleinem Abstand angeordnet sein. Sie können bei einer besonders einfachen Ausführungsform gerade verlaufen und unter einem Winkel zur Bandlaufrichtung von 30° angeordnet sein. Um möglichst lange Rückfördernuten zu erreichen, ist es nach Anspruch 5 vorteilhaft, die Dichtleisten als Flachprofile auszubilden, die mit ihren größeren Seitenflächen parallel zu der Bandfläche verlaufen und an Halteprofilen befestigt sind. Um einen möglichst guten Anpreßdruck des Bandes gegen die Dichtleisten zu gewährleisten,kann nach Anspruch 6 jeder Dichtleiste auf der gegenüberliegenden Bandseite auch ein Niederhalter zugeordnet werden. Die erfindungsgemäße Abdichteinrichtung läßt sich besonders vorteilhaft für eine mit einem Stahlband versehene Bandkühleinrichtung einsetzen, bei dem das Band von unten durch Sprühdüsen mit einem flüssigen Kühlmittel, insbesondere mit Wasser, beaufschlagt ist. Für eine Abdichtung an beiden Bandkanten werden, um die Funktion zu bewirken, spiegelbildlich ausgebildete Dichtleisten vorgesehen.

Die Erfindung ist in der Zeichnung anhand eines Ausführungsbeispieles dargestellt und wird im folgenden erläutert. Es zeigen:
- Fig. 1: einen schematischen Querschnitt durch einen Bandkühler gemäß der Erfindung und
- Fig. 2: eine perspektivische und teilweise aufgeschnittene Ansicht der Oberseite des Bandkühlers der Fig. 1.

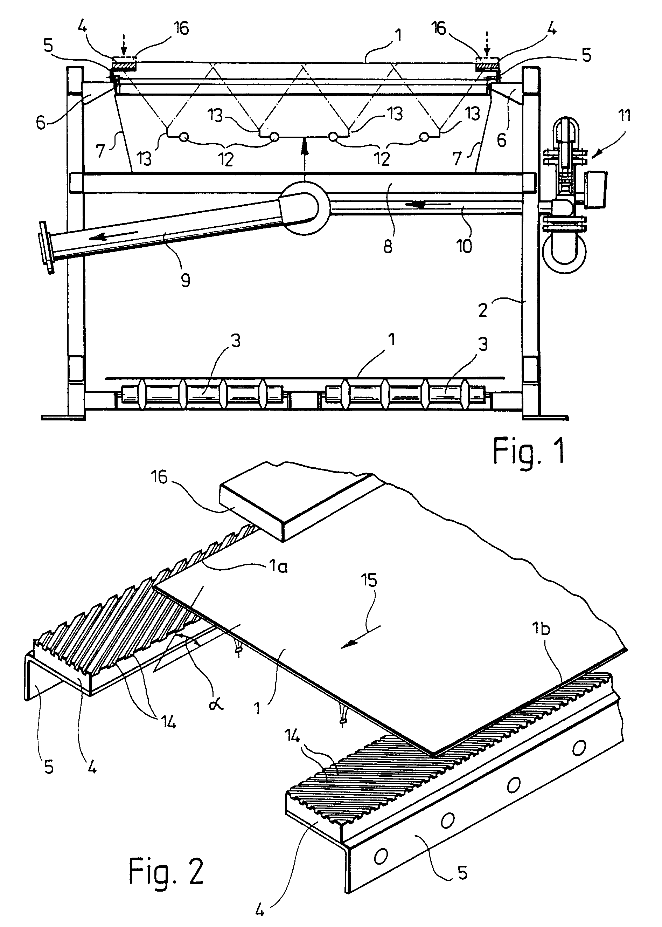

In den Fig. 1 und 2 ist ein Bandkühler gezeigt, der ein endloses umlaufendes Stahlband (1) besitzt, das in nicht näher dargestellter Weise um Umlenkrollen geführt ist. Das Band (1) ist zwischen einem Führungsgestell (2) angeordnet, in dem im unteren Bereich Tragrollen (3) für das rücklaufende Untertrum des Stahlbandes (1) gelagert sind und das an seinen beiden oberen Enden längsverlaufende Dichtleisten (4) aufweist, auf denen das obere Trum des Stahlbandes (1) aufliegt. Diese Dichtleisten (4), die im einzelnen anhand von Fig. 2 beschrieben werden, sind über Metallwinkelprofile (5), auf denen sie aufgeklebt oder gegebenenfalls auch aufvulkanisiert sind, an Haltewinkeln (6) angeschraubt, die fest mit dem Gestell (2) verbunden sind. Mit diesen Haltewinkeln (6) verbunden sind auch seitliche Spritzschutzwände (7), die oben dicht an die Winkelleisten (5) und damit an die Dichtleisten (4) anschließen und unten in eine Auffangwanne (8) übergehen, die ebenfalls im Gestell (2) gehalten ist und über eine Zuführleitung (10) mit einem Pumpaggregat (11) in Verbindung steht, das zur Druckversorgung mehrerer im Innenbereich der Spritzwände (7) angeordneter Druckrohre und von an diesen angeordnete, nur schematisch dargestellten Sprühdüsen (13) dient.Über jede dieser Sprühdüsen (13) wird zum Beispiel Wasser zu Kühlzwecken gegen die Unterseite des Stahlbandes (1) gesprüht, das von dort aus zwischen den Spritzwänden (7) herunterläuft und in der Wanne (8) zur Wiederverwendung aufgefangen wird. Das erwärmte Wasser wird über die Rücklaufleitung (9) einem Rückkühlgerät zugeführt. Dieses Wasser wird im Kreis gefahren und dient als Kühlmittel für nicht näher gezeigte, auf der Oberseite des Stahlbandes (1) aufgelegte Güter.

Wie Fig. 2 zeigt, sind die an der Unterseite des Stahlbandes (1) anliegenden Oberseiten der Dichtleisten (4) jeweils mit mehreren geraden und parallel zueinander verlaufenden Nuten (14) versehen, die von der den Außenkanten (1a, 1b) des Stahlbandes (1) zugeordneten Außenseite der Dichtleisten (4) aus schräg zu der Bandlaufrichtung (15) nach innen verlaufen. Die Nuten (14) sind dabei beim Ausführungsbeispiel unter einem Winkel (α) zur Bandlaufrichtung (15) geneigt, der 30° beträgt. Natürlich ist es möglich, auch andere Winkel vorzusehen ebenso, wie es auch möglich ist, die Nuten (14) nicht so wie im Ausführungsbeispiel als gerade und parallel laufende Nuten auszubilden, sondern beispielsweise auch als gebogene und sich von außen nach innen immer mehr der Bandlaufrichtung (15) annähernde gekrümmte Nuten auszubilden, die auch nicht unbedingt alle parallel zueinander verlaufen müssen. Das gezeigte Ausführungsbeispiel, bei dem die Dichtleisten (4) vorzugsweise aus einem Kunststoff oder aus einem anderen relativ elastischen Material bestehen, hat sich aber als besonders wirksam erwiesen. Natürlich ist es auch möglich, anstelle von Kunststoff andere Materialien für die Dichtleisten vorzusehen, wie zum Beispiel Holz oder Metall. Diese Materialauswahl kann auf den Anwendungsfall abgestimmt werden. Das verwendete Material hängt auch davon ab, wie groß der Reibungskoeffizient zwischen dem Stahlband und der Dichtleisten sein kann. Auch das verwendete Kühlmittel, das unter Umständen aggressiv sein kann, spielt bei der Auswahl des Materiales eine Rolle.

Wie in Fig. 1 und 2 lediglich angedeutet ist, ist es auch möglich, den Anpreßdruck des Stahlbandes (1) an die Dichtleisten (4) durch entsprechende Niederhalter (16) zu erhöhen, die ebenfalls in der Form von Flachprofilen etwa mit den Abmessungen wie die Dichtleisten (4) ausgebildet sein können. In besonderen Anwendungsfällen ist es sogar denkbar, auch deren dem Band (1) zugewandte Flächen mit Fördernuten zu versehen, die so wie die Nuten (14) wie ein abgewickeltes Gewinde wirken und bei der Relativbewegung des Bandes (1) gegenüber den Dichtleisten im Sinn der Bandlaufrichtung (15) Wasser oder sonstige Feuchtigkeit, die auf die Oberfläche des Bandes seitlich gelangt sein könnte, wieder zu den Seitenkanten des Bandes (1) nach außen wegfördern. In diesem Fall müßte der Verlauf der Nuten entgegengesetzt zu jenen der Nuten (14) sein, um die Förderung nach außen zu bewirken.

Wie Fig. 2 ohne weiteres erkennen läßt, ist die Anordnung der Nuten (14) an den beiden Dichtleisten (4), die jeweils einer Außenkante zugeordnet sind, spiegelbildlich vorgesehen. Die Nuten (14) auf der der Seitenkante (1b) zugeordneten Dichtleiste verlaufen daher unter einem Winkel zur Bandlaufrichtung (15), der dem Winkel (α), unter dem die Nuten (14) der linken, der Seitenkante (1a) zugeordneten Dichtleiste (4) verlaufen, entgegengesetzt ist.

Selbstverständlich wirkt die neue Abdichteinrichtung auch dann, wenn die Unterseite des Bandes (1) beispielsweise mit Dampf zum Zweck der Erwärmung von Gütern beaufschlagt wird, die auf der Bandoberseite liegen. Der dann an der Unterseite des Bandes kondensierende Dampf verhält sich wie die für das Ausführungsbeispiel beschriebene Kühlflüssigkeit, was deren Rückführung in den Bereich zwischen den Spritzwänden (7) betrifft.

## Patentansprüche

1. Abdichteinrichtung für ein laufendes Band (1), das mindestens auf einer Seite, insbesondere auf seiner Unterseite, von einem flüssigen oder kondensierenden dampfförmigen Medium beaufschlagt ist, um einen Wärmetransport zu oder von Gütern zu bewirken, die auf der anderen Bandseite liegen, bestehend aus im Bereich der Seitenkanten (1a, 1b) des Bandes (1) am Band anliegenden Dichtleisten (4), dadurch gekennzeichnet, daß die Dichtleisten (4) an ihrer am Band (1) anliegenden Seite mit Nuten (14) versehen sind,die in der Bandlaufrichtung (15) vom Bereich der Bandaußenkanten aus schräg nach innen verlaufen.

2. Abdichteinrichtung nach Anspruch 1, dadurch gekennzeichnet, daß die Nuten (14) parallel und in kleinem Abstand zueinander verlaufen.

3. Abdichteinrichtung nach den Ansprüchen 1 und 2, dadurch gekennzeichnet, daß die Nuten (14) gerade ausgebildet sind.

4. Abdichteinrichtung nach den Ansprüchen 1 bis 3, dadurch gekennzeichnet, daß die Nuten (14) unter einem Winkel (α) von 30° zur Bandlaufrichtung (15) geneigt sind.

5. Abdichteinrichtung nach einem der Ansprüche 1 bis 4, dadurch gekennzeichnet, daß die Dichtleisten (4) als Flachprofile ausgebildet sind, die mit ihren größeren Seitenflächen parallel zu den Flächen des Bandes (1) verlaufen und an Halteprofilen (5) befestigt sind.

6. Abdichteinrichtung nach einem der Ansprüche 1 bis 5, dadurch gekennzeichnet, daß jeder Dichtleiste (4) auf der gegenüberliegenden Seite des Bandes (1) ein Niederhalter (16) zugeordnet ist.

7. Abdichteinrichtung nach Anspruch 1, dadurch gekennzeichnet, daß das laufende Band ein Stahlband (1) einer Bandkühleinrichtung ist, das von unten durch Sprühdüsen (13) mit einem flüssigen Kühlmittel, insbesondere Wasser, beaufschlagt ist.

8. Abdichteinrichtung nach Anspruch 1, dadurch gekennzeichnet, daß die im Bereich der beiden Seitenkanten (1a, 1b) des Bandes (1) angeordneten Dichtleisten (4) spiegelbildlich zueinander ausgebildet sind.

## Claims

1. A sealing arrangement for a moving belt (1) at least one side, particularly the underside, of which is sprayed with a liquid or condensing, vaporous medium in order to convey heat to or from goods positioned on the other side of the belt, consisting of sealing strips (4) positioned adjacent to the outer edges of the belt (1a, 1b), characterised in that the sides of the sealing strips (4) adjacent to the belt (1) are provided with channels (14) which run from the outer edges of the belt diagonally inwards in the direction of movement of the belt.

2. A sealing arrangement in accordance with claim 1, characterised in that the channels (14) run parallel to one another and are closely spaced.

3. A sealing arrangement in accordance with claims 1 and 2, characterised in that the channels (14) are straight.

4. A sealing arrangement in accordance with claims 1 to 3, characterised in that the channels (14) are inclined at an angle (α) of 30° to the direction of movement of the belt (15).

5. A sealing arrangement in accordance with claims 1 to 4, characterised in that the sealing strips (4) are designed as flat sections the larger sides of which run parallel to the surfaces of the belt (1) and are fixed to retaining brackets (5).

6. A sealing arrangement in accordance with one of claims 1 to 5, characterised in that for each sealing strip (4) there is a clamping element (16) positioned on the opposite side of the belt (1).

7. A sealing arrangement in accordance with claim 1, characterised in that the moving belt is a steel belt (1) in a belt cooling device which is sprayed from below through spray nozzles (13) with a liquid coolant, particularly water.

8. A sealing arrangement in accordance with claim 1, characterised in that the sealing strips (4) located at the edges (1a, 1b) of the belt (1) are positioned symmetrically to each other.

## Revendications

1. Dispositif d'étanchéité pour une bande transporteuse qui défile (1), qui au moins sur un côté, en particulier sur son dessous, est aspergée par un milieu liquide ou sous forme de vapeur condensant, pour effectuer un transport calorifique de ou en marchandises, qui sont placées sur l'autre côté de la bande, se composant de barres d'étanchéité (4) collées à la bande transporteuse dans la zone des bords latéraux (1a, 1b) de la bande transporteuse (1), caractérisé en ce que les barres d'étanchéité (4) sont pourvues de rainures (14) au niveau de leur côté collé à la bande transporteuse (1), qui se développent en biais vers l'intérieur depuis la zone des bords externes de la bande transporteuse dans le sens de défilement de la bande transporteuse (15).

2. Dispositif d'étanchéité selon la revendication 1, caractérisé en ce que les rainures (14) se développent parallèlement et à faible distance les unes des autres.

3. Dispositif d'étanchéité selon l'une quelconque des revendications 1 et 2, caractérisé en ce que les rainures (14) sont développées en ligne droite.

4. Dispositif d'étanchéité selon l'une quelconque des revendications 1 à 3, caractérisé en ce que les rainures (14) sont inclinées d'un angle (α) de 30° par rapport au sens de défilement de la bande transporteuse (15).

5. Dispositif d'étanchéité selon l'une quelconque des revendications 1 à 4, caractérisé en ce que les barres d'étanchéité (4) sont réalisées comme des profils plats, qui se développent par leurs plus grandes faces latérales parallèlement aux faces de la bande transporteuse (1) et sont fixées à des profilés de fixation (5).

6. Dispositif d'étanchéité selon l'une quelconque des revendications 1 à 5, caractérisé en ce qu'un dispositif de pression (16) est associé à chaque barre d'étanchéité (4) sur le côté opposé de la bande transporteuse (1).

7. Dispositif d'étanchéité selon la revendication 1, caractérisé en ce que la bande transporteuse qui défile est une bande transporteuse en acier (1) d'un dispositif de refroidissement de bande transporteuse, qui est aspergée, par en dessous à l'aide de buses de pulvérisation (13) avec un moyen réfrigérant liquide, en particulier avec de l'eau.

8. Dispositif selon la revendication 1, caractérisé en ce que les barres d'étanchéité (4) disposées dans la zone des deux bords latéraux (1a, 1b) de la bande transporteuse (1) sont réalisés symétriquement l'une par rapport à l'autre.
